# EUROPEAN PATENT APPLICATION

(11) **EP 4 751 975 A1**
(43) Date of publication of application: **03.06.2026**
(21) Application number: 25219805.6
(22) Date of filing: 01.12.2025
(51) Int. Cl.: B60L 1/02, B60L 50/60, B60L 50/70, B60L 58/27, H01M 10/625

(54) **CONDITIONING AN ENERGY STORAGE SYSTEM IN AN ELECTRIC VEHICLE BEFORE DEPARTURE**

(30) Priority: 02.12.2024 SE 2451219
(71) Applicant: Volvo Truck Corporation, 405 08 Göteborg (SE)
(72) Inventor: ARYA, Pranav, 412 85 Göteborg (SE); LEMAITRE, Guillaume, 413 20 Göteborg (SE)
(74) Representative: Valea AB

(57) **Abstract**

A system and method for controlling operation of an electric vehicle (10, 100), comprising a power assembly (12, 120) comprising an energy storage system (ESS), (14, 140) are provided. The method comprises, responsive to detecting a request for a vehicle shutdown, estimating (304) a time to freeze for the ESS; responsive to determining that the time to freeze is longer than a duration of the vehicle shutdown, instructing (314) the vehicle to perform the vehicle shutdown without performing a keep-warm strategy for the ESS; responsive to determining that the time to freeze is not longer than the duration of the vehicle shutdown, determining (316) a keep-warm time limit; and, responsive to determining that the keep-warm time limit is longer than the duration of the vehicle shutdown, instructing (320) the electric vehicle to perform the vehicle shutdown and initiate the keep-warm strategy for the ESS that comprises maintaining the temperature of the ESS above a second threshold temperature.

## Description

### TECHNICAL FIELD

The disclosure relates generally to operating an electric vehicle such as a fuel cell electric vehicle or a battery electric vehicle. It further relates to a control system, the electric vehicle, a computer program product, and a tangible non-transitory computer-readable medium.

The disclosure can be applied in heavy-duty vehicles, such as trucks, buses, and construction equipment. Although the disclosure may be described with respect to a particular vehicle, the disclosure is not restricted to any particular vehicle.

### BACKGROUND

Electrical vehicles, such as e.g. a fuel cell electric vehicle (FCEV) or a battery electric vehicle (BEV) rely on use of an energy storage system (ESS) such as one or more batteries. In an FCEV, electricity, that is used to power one or more electric motors that drive the wheels, comes directly from a fuel cell system and/or from an onboard ESS that stores both excess electricity and electricity generated by regenerative braking.

It is desirable to keep the ESS warm when the vehicle is shut down, so that a cold start is avoided when the vehicle starts next. This may be a challenge in cold climates or at cold temperatures, especially at freezing temperatures. Although various warm-up strategies exist that are used to warm up batteries before and/or at a vehicle start, the strategies typically require large amounts of energy to maintain a temperature of the batteries above a certain threshold.

Accordingly, a need remains for improved, energy-efficient methods for keeping the ESS of an electric vehicle warm when the vehicle is shut down.

### SUMMARY

Aspects of the present disclosure relate to control of operation of an electric vehicle in the manner that improves a cold start performance of the vehicle as well as improves a lifetime of an energy storage system (ESS). A method in accordance with examples of the present disclosure involves making a decision regarding a warm-up or a keep-warm strategy implemented for the ESS such as a battery of the vehicle at and/or during a shutdown of the vehicle. The keep-warm strategy in accordance with aspects and/or examples of the present disclosure considers a departure time for the vehicle, ambient conditions and other factors, as well as different heat sources that are available on the vehicle. The keep-warm strategy allows keeping the ESS warm in an energy-efficient manner because reduced amounts of energy are consumed.

As used herein, the keep-warm strategy or procedure refers to one or more actions that are performed to raise a temperature of the ESS and/or keep the temperature of the ESS at or above a certain threshold temperature. The one or more actions may include, for a fuel cell electric vehicle, acquiring energy or power from a fuel cell system or from the ESS itself for raising the temperature of the ESS, operating a hydrogen heater or another heating device to raise the temperature of the ESS. The one or more actions may include, for a battery electric vehicle, acquiring energy or power from the ESS itself for raising the temperature of the ESS by operating an electric heater or another heating device to raise the temperature of the ESS. The keep-warm strategy or procedure involves determining which actions to take such as which one or more power sources to use to raise a temperature of the ESS and/or keep the temperature of the ESS at or above a certain threshold temperature.

In an aspect, a method for controlling operation of an electric vehicle comprising a power assembly that comprises an energy storage system is provided. The method comprises, responsive to detecting a request for a vehicle shutdown of the fuel cell electric vehicle, estimating a time to freeze for the ESS, the time to freeze comprising a duration of time until a temperature of the ESS can be reduced to below a first threshold temperature; comparing a duration of the vehicle shutdown and the time to freeze; responsive to determining that the time to freeze is longer than the duration of the vehicle shutdown, instructing the electric vehicle to perform the vehicle shutdown without performing a keep-warm strategy for the ESS; responsive to determining that the time to freeze is not longer than the duration of the vehicle shutdown, determining a keep-warm time limit comprising the time to freeze and an additional time during which the temperature of the ESS can be maintained above a second threshold temperature; and, responsive to determining that the keep-warm time limit is longer than the duration of the vehicle shutdown, instructing the electric vehicle to perform the vehicle shutdown and initiate the keep-warm strategy for the ESS, the keep-warm strategy comprising maintaining the temperature of the ESS above the second threshold temperature.

In some examples, the first threshold temperature may be a temperature above which the ESS is maintained to allow a sufficient start-up performance as well as to increase a lifetime of the ESS. The second threshold temperature may be a temperature below which the ESS start-up performance would not permit operating the vehicle properly and below which a lifetime of the ESS may be negatively affected.

The vehicle start-up performance may be defined as a performance of the vehicle after the vehicle is started, such as an ability of the vehicle to operate to as to perform maneuvers needed for a task or mission performed by the vehicle, e.g. ability to accelerate, decelerate, and maintain target speed. The vehicle start-up performance depends on how much electrical current or power can be taken from the ESS for one or more propulsion motors of the vehicle. And the amount of electrical current or power that can be taken from the ESS, in turn, depends on a temperature of the ESS such as battery cells. Simply put, if the ESS is too cold, it may not be able to provide sufficient electrical power for the vehicle to accelerate or to maintain a target speed. Moreover, if the temperature of the ESS is not sufficiently warm, the ESS may not be able to absorb sufficient power to enable regenerative braking ability.

The vehicle start-up performance may be quantified using one or more parameters related to the vehicle's ability to accelerate, decelerate, and maintain target speed. Parameters defining the vehicle start-up performance may be used to determine the first threshold temperature and the second threshold temperature. In some examples, at least some of the parameters defining the vehicle start-up performance may be available from a manufacturer of the vehicle.

In some examples, the electric vehicle comprises a fuel cell electric vehicle (FCEV). In some examples, the electric vehicle comprises a battery electric vehicle (BEV). In some examples, the electric vehicle comprises a hybrid electric vehicle (HEV). The electric vehicle may be any type of an electric vehicle comprising an ESS such as e.g. one or more batteries, wherein it is desirable to keep the batteries warm such as above a certain temperature when the vehicle is shut down and/or parked.

The technical benefits include a reduced energy consumption by the vehicle, which improves efficiency of operation of the vehicle. The performance of the ESS is improved due to the increase in the available energy or power of the ESS and decrease in its internal impedance. Power and capacity fading of the ESS due to cold-temperature operation may be reduced, whereby a lifetime of the ESS may be increased.

In some examples, the method comprises, responsive to determining that the keep-warm time limit is not longer than the duration of the vehicle shutdown, automatically generating a request instructing to connect the electric vehicle to a grid or move the electric vehicle to an environment where an ambient temperature remains above a freezing temperature.

In some examples, the method comprises estimating the duration of the vehicle shutdown in response to detecting the request for the vehicle shutdown.

In some examples, the duration of the vehicle shutdown may be estimated using one or more of a driver input, a driver behavior, location data, historical data on operation of the electric vehicle, mission data on one or more missions assigned to the electric vehicle, and/or fleet information regarding a fleet to which the electric vehicle belongs.

In some examples, the duration of the vehicle shutdown may be estimated using the driver input received in response to a request provided to the driver and instructing the driver to indicate the duration of the vehicle shutdown.

In some examples, the duration of the vehicle shutdown may be known at a time the request for the vehicle shutdown is detected.

In some examples, the time to freeze may be determined using one or more of current and/or predicted ambient conditions, location data, and a thermal model of the ESS.

In an aspect, a control system is provided that is configured to control operation of an electric vehicle comprising a power assembly comprising an energy storage system, ESS. The control system comprises processing circuitry that is configured to, responsive to detecting a request for a vehicle shutdown of the electric vehicle, estimate a time to freeze for the ESS, the time to freeze comprising a duration of time until a temperature of the ESS can be reduced to below a first threshold temperature; compare a duration of the vehicle shutdown and the time to freeze; responsive to determining that the time to freeze is longer than the duration of the vehicle shutdown, instruct the vehicle to perform the vehicle shutdown without performing a keep-warm strategy for the ESS; responsive to determining that the time to freeze is not longer than the duration of the vehicle shutdown, determine a keep-warm time limit comprising the time to freeze and an additional time during which the temperature of the ESS can be maintained above a second threshold temperature; and responsive to determining that the keep-warm time limit is longer than the duration of the vehicle shutdown, instruct the vehicle to perform the vehicle shutdown and initiate the keep-warm strategy for the ESS.

The technical benefits include a reduced energy consumption by the vehicle, which improves efficiency of operation of the vehicle. The performance of the ESS is improved due to the increase in the available energy or power of the ESS and decrease in its internal impedance. Power and capacity fading of the ESS due to cold-temperature operation may be reduced, whereby a lifetime of the ESS may be increased.

In some examples, the processing circuitry may further be configured to, responsive to determining that the keep-warm time limit is not longer than the duration of the vehicle shutdown, automatically generate a request instructing to connect the electric vehicle to a grid or move the electric vehicle to an environment where an ambient temperature remains above a freezing temperature.

In some examples, the processing circuitry may further be configured to estimate the duration of the vehicle shutdown in response to detecting the request for the vehicle shutdown.

In some examples of the control system, the duration of the vehicle shutdown may be estimated using one or more of a driver input, a driver behavior, location data, historical data on operation of the electric vehicle, mission data on one or more missions assigned to the electric vehicle, and/or fleet information regarding a fleet to which the electric vehicle belongs.

In some examples of the control system, the duration of the vehicle shutdown may be estimated using the driver input received in response to a prompt presented to the driver and instructing the driver to indicate the duration of the vehicle shutdown.

In some examples of the control system, the duration of the vehicle shutdown may be known at a time the request for the vehicle shutdown is detected.

In some examples of the control system, the time to freeze may be determined using one or more of current and/or predicted ambient conditions, location data, and properties of a thermal management system of the power assembly.

According to an aspect of the disclosure, an electric vehicle is provided that comprises a control system in accordance with examples of the present disclosure. In some examples, the electric vehicle comprises a fuel cell electric vehicle. In some examples, the electric vehicle comprises a battery electric vehicle.

The technical benefits of the electric vehicle may be the same or similar to those achieved by the control system in accordance with any one or more examples of the present disclosure, as discussed above. Further, all embodiments of the control system are applicable to and combinable with all embodiments of the electric vehicle according to the examples herein, and vice versa.

According to an aspect of the disclosure, a computer program product is provided that comprises computer-executable instructions, which, when executed by processing circuitry, cause the processing circuitry to perform the method in accordance with examples of the present disclosure.

The technical benefits of the computer program may be the same or similar to those achieved by the method in accordance with any one or more examples of the present disclosure, as discussed above. Further, all embodiments of the method are applicable to and combinable with all embodiments of the computer program according to the examples herein, and vice versa.

According to an aspect of the disclosure, a tangible non-transitory computer-readable storage medium is provided. The tangible non-transitory computer-readable storage medium has stored thereon a computer program product comprising computer-executable instructions which, when executed by processing circuitry, cause the processing circuitry to perform the method in accordance with examples of the present disclosure.

The technical benefits of the computer-readable storage medium may be the same or similar to those achieved by the method in accordance with any one or more examples of the present disclosure, as discussed above. Further, all embodiments of the method are applicable to and combinable with all embodiments of the computer-readable storage medium according to the examples herein, and vice versa.

The disclosed aspects, examples, and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

### BRIEF DESCRIPTION OF THE DRAWINGS

With reference to the appended drawings, below follows a more detailed description of aspects of the disclosure cited as examples.
**FIG. 1A** illustrates a side view of an example of a fuel cell electric vehicle (FCEV) in which a method in accordance with aspects of the present disclosure may be implemented.
**FIG. 1B** illustrates a side view of an example of a battery electric vehicle (BEV) in which a method in accordance with aspects of the present disclosure may be implemented.
**FIG. 2** is a block diagram illustrating in more detail some components of the fuel cell vehicle of FIG. 1A.
**FIG. 3** is a flow chart illustrating a method for controlling operation of an electric vehicle, in accordance with examples of the present disclosure.
**FIG. 4** is a schematic diagram of a computer system for implementing examples in accordance with the present disclosure.

### DETAILED DESCRIPTION

In electric vehicles, such as FCEVs or BEVs, an energy storage system (ESS) comprises one or more batteries. A battery may be a lithium-ion (Li-ion) battery that is considered a good choice for electric vehicles, due to properties such as high specific energy, high energy density and low self-discharge rate in comparison with other battery technologies. At the same time, certain features of Li-ion batteries may reduce their performance, charging time and durability, which affects their adoption in electric vehicles. In particular, Li-ion batteries may be sensitive to cold temperatures which may reduce the available energy of the battery and increase its internal impedance. Moreover, Li-ion batteries may experience degradation at low temperatures which strongly affects their performance. This presents difficulties in operating electric vehicles with Li-ion batteries in cold temperatures.

Accordingly, thermal management techniques are presented herein that allow improving a thermal performance on the ESS. A cold start of the ESS may be avoided or prevented, whereby efficiency and performance of the ESS are improved.

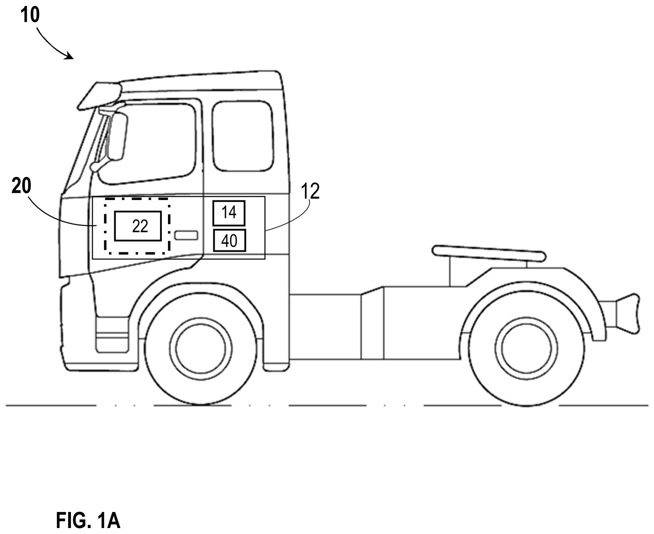

**FIG. 1A** depicts a side view of an electric vehicle 10 according to an example of the present disclosure. The electric vehicle 10 is shown as a truck, such as a heavy-duty truck for towing one or more trailers. The electric vehicle 10 may be a FCEV or a hybrid vehicle comprising a fuel cell system. It should be appreciated that the present disclosure is not limited to any specific type of vehicle, and may be used for any other type of vehicle, such as a bus, construction equipment, e.g. a wheel loader or an excavator, a passenger car, an aircraft, and a marine vessel.

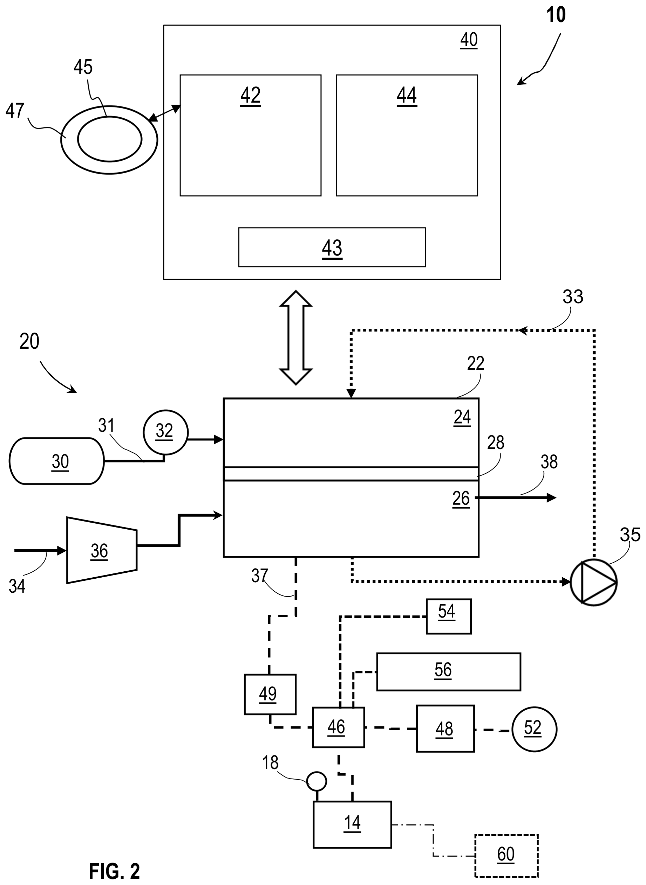

As shown schematically in FIG. 1A, the vehicle 10 comprises a power assembly 12 that comprises a fuel cell system 20 and an ESS 14. The fuel cell system 20 may be used for powering one or more electric drive motors, also referred to as propulsion motors, shown in FIG. 2, which are used for creating a propulsion force to the vehicle 10. The fuel cell system 20 may additionally or alternatively be used for powering other electric power consumers (not shown) of the vehicle 10, such as an electric motor for a crane, an electric motor for a refrigerator system, an electric motor for an air conditioning system, or any other electric power consuming function of the vehicle 10. The fuel cell system 20 may thus additionally or alternatively be used for powering one or more power take-off (PTO) devices which rely on transferring an electric motor's mechanical power to another piece of equipment.

The ESS 14 may comprise one or more rechargeable batteries, e.g., Li-ion batteries, for storing electric energy, including excess electric energy produced by the fuel cell system 20. The ESS 14 may store energy produced during regenerative braking, and/or it may be configured for charging by a charger, such as, e.g., from an external power grid. The ESS 14 is configured to assist the fuel cell system in supplying energy to the electric drive motor, to meet power/energy demands of the vehicle 10. The ESS 14 may be configured to provide additional propulsive power in situations when the complete required power cannot be provided by fuel cell system 20 or when it is not suitable to provide the complete required power by the fuel cell system 20. The fuel cell system 20 and the ESS 14 can provide power to one or more auxiliary devices or systems of the vehicle 10.

The fuel cell system 20 comprises two or more fuel cells which together form a fuel cell stack 22 as shown in FIG. 1A. The fuel cell system 20 may include various components which are not shown herein. In some examples, the fuel cell system may comprise more than one fuel cell system.

The vehicle 10 further comprises a controller or control unit or control system 40 according to an example of the present disclosure. The control system 40 may be configured to control the fuel cell system 20, the ESS, and other components of the vehicle 10. In some examples, the control system 40 may encompass two or more other control units or systems, e.g., an ESS control unit, a fuel cell control unit, a battery management unit (BMU) and/or others. In some examples, the functionality described herein as performed by the control system 40 may be performed by one or more control units, i.e. the control system 40 may encompass more than one control unit or system.

The control system 40 is configured to control components of the vehicle by issuing control signals and by receiving status information relating to the components. The control system 40 may be configured to receive information from various sensors, including one or more of temperature sensors, moisture sensors, and other sensors included in or associated with the ESS 14 and the fuel cell system 20 and/or the vehicle 10. For example, one or more temperature sensors may be included to measure a temperature of the ESS 14, and the control system 40 may obtain temperature measurements acquired by the one or more temperature sensors. One or more temperature sensors may be associated with the fuel cell system 20.

It should be appreciated that the fuel cell system 20 may be controlled by a separate controller, such as e.g. a fuel cell control unit (FCCU) The fuel cell control unit controls operation of the fuel cell system and its individual sub-systems, such as a hydrogen supply, air supply, thermal and water-management, and others.

In some examples, the FCCU may be part of the control system 40 that is configured to control operation of other components of the vehicle 10.

The control system 40 may include and/or may be communicatively coupled to an internal database, an external database, or a combination thereof, to receive historical data related to driver's driving pattern, historical data on the vehicle operation e.g. locations traveled by the vehicle, frequency and locations of stops, historical data on ambient conditions, etc. The control system 40 may receive data from a weather service which may include data on actual and/or predicted weather conditions, and other types of data. The data on weather conditions, such as actual and/or predicted weather conditions, may include data on environmental conditions such as a vehicle current location, altitude, latitude, and wind speeds. Also, the control system 40 may be aware of a location in which the vehicle is stopped and characteristics of the location, such as e.g. whether the vehicle is parked indoors or outdoors.

The control system 40 is also configured to receive data from a global positioning system (GPS). The vehicle 10 may be equipped with a GPS device such as a GPS tracker, and the control system 40 may receive information related to a current location of the vehicle 10. The control system 40 may obtain information about traffic and other conditions related to the route traveled by the vehicle. The control system 40 may obtain data from various sources such as, e.g., one or more out of vehicle-to-everything (V2X) infrastructure, a vehicle-to-vehicle (V2V) infrastructure, a dedicated short range communication (DSRC), a vehicle controller area network (CAN), artificial intelligence (AI), Internet of Things (IoT), and combinations thereof. In some examples, the control system 40 may access data stored in a cloud storage.

The control system 40 may be an electronic control unit (ECU). The control system 40 may include a microprocessor, microcontroller, programmable digital signal processor or another programmable device. The control system 40 may comprise electronic circuits and connections as well as processing circuitry that is adapted and/or configured to execute a computer program such as computer-executable instructions, to cause the control system 40 to perform a method according to aspects of the present disclosure. The control system can communicate with different parts of the fuel cell system or any other components of the vehicle in order to provide the functions of the examples in accordance with aspects of the present disclosure. The processing circuitry may be a general purpose processor or a specific processor.

In some examples, the control system 40 may be denoted a computer. The control system 40 may be constituted by one or more separate sub-units, and the control system 40 may communicate by use of wired and/or wireless communication technology.

The vehicle 10 also comprises various other components not shown in FIG. 1A.

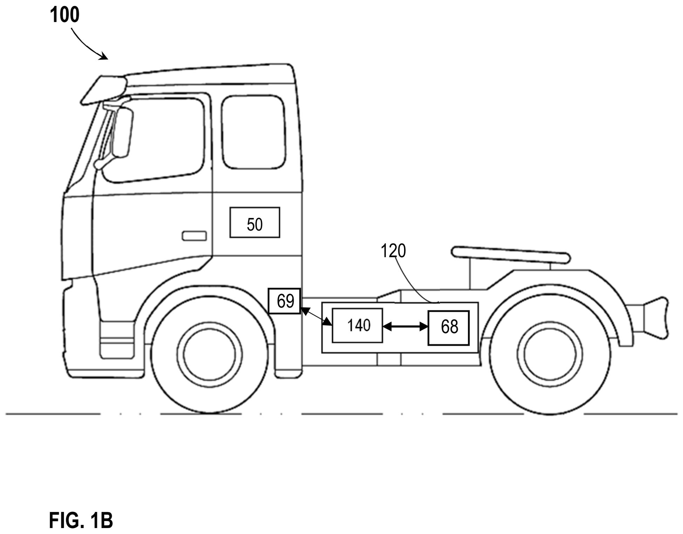

**FIG. 1B** depicts a side view of an electric vehicle 100 according to an example of the present disclosure. The electric vehicle 100 may be a battery electric vehicle (BEV) which is a pure electric vehicle which uses no secondary source of propulsion such as no hydrogen fuel cell, internal combustion engine, etc. By way of example only, the BEV 100 is shown as a truck, such as a heavy-duty truck for towing one or more trailers. As shown very schematically in FIG. 1B, the electric vehicle 100 comprises a power assembly 112 comprising an ESS 140 such as a traction battery that is configured to power one or more electric motors 68.

The ESS 140, such as the traction battery may comprise a battery unit or pack comprising one or more battery cells. The traction battery is rechargeable and may comprise batteries such as e.g. Li-ion batteries.

In addition to providing energy for propulsion, the battery 140 may provide energy for
other vehicle electrical systems. For example, the battery 140 may transfer energy to high-voltage loads, such as, but not limited to, one or more power inverters, integrated power electronics, a compressor e.g. an air conditioning (AC) compressor and electric heater shown as a heater 69 in FIG. 1B. The electric heater and/or other components that may be coupled to the electric heater may be configured to precondition the ESS 140 before departure by raising a temperature of the ESS 140 to a desired temperature. The electric vehicle 100 may comprise a dedicated electric heater for controlling a temperature of the ESS 140. In some examples, the electric heater 69 may be configured to be selectively controlled to heat the ESS 140 and/or the cabin of the vehicle. Regardless of the specific mechanism that is used to raise the temperature of the ESS 140, the heating of the ESS 140 may be controlled in accordance with examples of the present disclosure.

As shown in FIG. 1B, the electric vehicle 100 comprises a controller or control system 50 according to an example of the present disclosure. The control system 50 may be configured to control the ESS 140 and other components of the vehicle 100.

The control system 50 is configured to control components of the vehicle 100 by issuing control signals and by receiving status information relating to the components. The control system 50 may be configured to receive information from various sensors, including one or more of temperature sensors, moisture sensors, and other sensors included in or associated with the ESS 140 and other components of the vehicle 100.

The control system 50 may include and/or may be communicatively coupled to an internal database, an external database, or a combination thereof, to receive historical data related to driver's driving pattern, historical data on the vehicle operation e.g. locations traveled by the vehicle, frequency and locations of stops, historical data on ambient conditions, etc. The control system 50 may receive data from a weather service which may include data on weather conditions, and other types of data. The data on weather conditions, such as actual and/or predicted weather conditions, may include data on environmental conditions such as a vehicle current location, altitude, latitude, and wind speeds. Also, the control system 50 may be aware of a location in which the vehicle 100 is stopped and characteristics of the location, such as e.g. whether the vehicle 100 is parked indoors or outdoors.

The control system 50 is also configured to receive data from a global positioning system (GPS). The vehicle 100 may be equipped with a GPS device such as a GPS tracker, and the control system 50 may receive information related to a current location of the vehicle 100. The control system 50 may obtain information about traffic and other conditions related to the route traveled by the vehicle. The control system 50 may obtain data from various sources such as, e.g., one or more out of vehicle-to-everything (V2X) infrastructure, a vehicle-to-vehicle (V2V) infrastructure, a dedicated short range communication (DSRC), a vehicle controller area network (CAN), artificial intelligence (AI), Internet of Things (IoT), and combinations thereof. In some examples, the control system 50 may access data stored in a cloud storage.

The control system 50 may be an electronic control unit (ECU). The control system 50 may include a microprocessor, microcontroller, programmable digital signal processor or another programmable device. The control system 50 may comprise electronic circuits and connections as well as processing circuitry that is adapted and/or configured to execute a computer program such as computer-executable instructions, to cause the control system 50 to perform a method according to aspects of the present disclosure. The control system 50 can communicate with different parts of the fuel cell system or any other components of the vehicle in order to provide the functions of the examples in accordance with aspects of the present disclosure. The processing circuitry may be a general purpose processor or a specific processor.

In some examples, the control system 50 may be denoted a computer. The control system 50 may be constituted by one or more separate sub-units, and the control system 50 may communicate by use of wired and/or wireless communication technology.

The vehicle 100 also comprises various other components not shown in FIG. 1B.

It should be appreciated that the electric vehicles 10 and 100 are shown as examples only, to illustrate generally examples of vehicles in which the techniques in accordance with examples of the present disclosure may be implemented. Depicted positions of the components of the vehicles 10 and 100, shown in FIGs. 1A and 1B, respectively, are for illustrative purposes only and not to indicate any actual locations or communications of the components.

**FIG. 2** additionally illustrates an example of the FCEV 10 comprising the fuel cell system 20. As shown, the fuel cell system 20 comprises the fuel cell stack 22, formed by multiple fuel cells and comprising an anode or anode side 24, a cathode or cathode side 26, and an electrolyte 28 such as e.g. a proton exchange membrane (PEM) sandwiched between the anode 24 and the cathode 26. The anode side 24 receives fuel such as e.g. hydrogen gas that can be supplied via a hydrogen supply line 31 from a hydrogen storage device 30 e.g. a hydrogen storage container or tank. The hydrogen supply line 31 may comprise a hydrogen heater 32 configured to raise a temperature of the hydrogen storage device 30, though other components may be used.

The cathode side 26 receives air or oxygen from the ambient environment, as shown by an arrow 34. The ambient air may be filtered, and it is pressurized by an air compressor 36. The pressurized air may be humidified using a humidifier (not shown).

As also shown schematically in FIG. 2, the fuel cell system 20 may comprise at least one exhaust conduit 38 configured to carry away from the fuel cell stack 22 an exhaust flow such as byproducts of operation of the fuel cell stack 22.

As further shown schematically in FIG. 2, electric power, labeled as 37, generated by the fuel cell stack 22 may be supplied to a junction box or unit 46, such as a high-voltage junction box, through a converter 49, such as e.g. a DC/DC (direct current/direct current) converter, that supplies the power at a required voltage. The power is supplied, via the junction unit 46, to an electric machine or motor 48 for propelling one or more sets of wheels 52 of the vehicle. The junction unit 46 is a component that serves as a communal meeting spot for electrical connections between the fuel cell stack 22, the ESS 14, the electric machine 48, a brake resistor 54, and one or more auxiliary power consuming devices, collectively labeled as 56, of the vehicle 10. The junction box 46 may also be configured to be connected to a grid 60 shown very schematically in FIG. 2 with a dotted box.

The power produced by the fuel cell stack 22 can be directed, via the junction unit 46, to various components, e.g. to the ESS 14. The power produced by the fuel cell stack 22 can also be directed to the brake resistor 54 and/or to the auxiliary power consuming device 56 such as, e.g., an air conditioning system, one or more heaters, or any other electrical consumers such as one or more pumps, one or more actuators and/or other electrical devices. The ESS 14 may store regenerative braking energy or power.

The ESS 14, such as a battery pack comprising one or more batteries, can be chargeable from the grid 60. The ESS 14 may be coupled to the grid 60, e.g. via a charger such as e.g. a bi-directional power conversion structure or power stage. As shown in FIG. 2, the ESS 14 may be associated with one or more temperature sensors 18 that are configured to acquire measurements indicative of a temperature of the ESS 14.

The vehicle 10 and/or power assembly 12 may comprise various other components some of which may be controlled as part of the preconditioning of the vehicle via the keep-warm strategy. The components may include, e.g., an electric heater configured to generate heat to raise a temperature of the ESS 14 and in some cases of the vehicle cabin, and other components. As shown very schematically in FIG. 2, a cooling system may comprise a cooling circuit 33 comprising a coolant pump 35 configured to pump and/or circulate a coolant through the cooling circuit 33, to control a temperature of the fuel cell system 20. The cooling system may include various other components, and may also be used for controlling the temperature of the ESS. In some examples, the vehicle 10 may include more than one pump for pumping and/or circulating a coolant. Circulation of a coolant in a heater for the vehicle cabin and of a coolant in a heater for the ESS may be performed by respective separate pumps. In some examples, the same pump(s) may be configured to push the coolant through the heaters for the vehicle cabin and the ESS 14.

FIG. 2 also illustrates an example of a configuration of the control unit or system 40. As shown, the control system 40 comprises processing circuitry 42 e.g. one or more processors, memory 44, and an input and output interface 43 configured to communicate with any necessary components and/or entities of examples herein. The input and output interface 43 may comprise a wireless and/or wired receiver and a wireless and/or wired transmitter. In some examples, the input and output interface 43 may comprise a wireless and/or wired transceiver. The control system 40 may use the input and output interface 43 to control and communicate with various sensors, actuators, subsystems, and/or interfaces of the ESS 14, fuel cell system 20 and the vehicle 10, by using any one or more out of a Controller Area Network (CAN) bus, ethernet cables, Wi-Fi, Bluetooth, and/or other network interfaces.

The methods described herein may be implemented using processing circuitry, e.g., one or more processors, such as the processing circuitry 42 of the control system 40, together with computer program code stored in a computer-readable storage medium for performing the functions and actions of the examples herein.

The memory 44 may comprise one or more memory units. The memory 44 comprises computer-executable instructions executable by the processing circuitry 42 of the control system 40. The memory 44 is configured to store, e.g., information, data, etc., and the computer-executable instructions to perform, when executed by the processing circuitry 42, the methods in accordance with examples herein. The control system 40 may additionally obtain information from an external memory.

The methods according to the aspects of the present disclosure may be implemented by e.g. a computer program product 45 or a computer program, comprising computer-executable instructions, i.e., software code portions, which, when executed by processing circuitry, e.g., the processing circuitry 42, cause the processing circuitry to perform the actions described herein, as performed by the control system 40.

In some examples, the computer program product 45 is stored on a tangible computer-readable storage medium 47. The computer-readable storage medium 47 may be, e.g., a disc, a universal serial bus (USB) stick, or similar device. The computer-readable storage medium 47, having stored thereon the computer program product, may comprise computer-executable instructions which, when executed by the processing circuitry 42, cause the processing circuitry to perform the actions of the methods in accordance with examples of the present disclosure described herein, as performed by the control system 40.

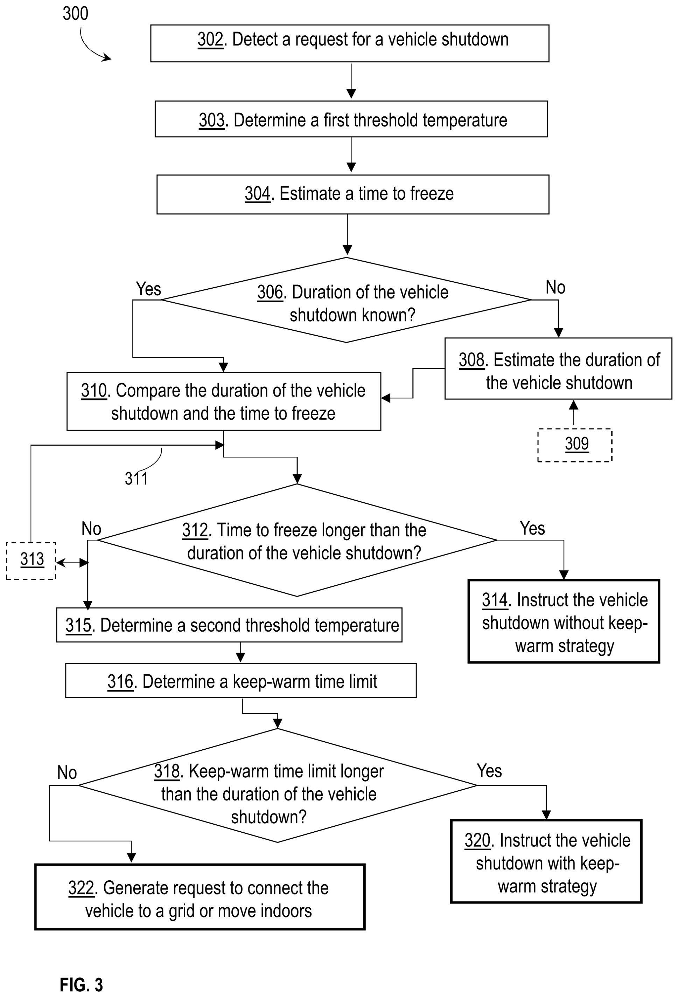

Those skilled in the art will appreciate that the control system 40, e.g., units thereof configured to perform the processing at blocks of FIG. 3, discussed below, may refer to a combination of analogue and digital circuits. The one or more processors of the control system 40 are configured with software and/or firmware that, when executed by the respective one or more processors, may perform the methods in accordance with examples of the present disclosure. One or more of these processors, as well as the other digital hardware, may be included in a single Application-Specific Integrated Circuitry (ASIC), or several processors and various digital hardware may be distributed among several separate components, whether individually packaged or assembled into a system-on-a-chip.

It should be noted that the control system 50 of the BEV 100 shown in FIG. 1B may be configured similarly to the control system 40 of the FCEV 10. Thus, the control system 50 may have a processing circuitry e.g. one or more processors and memory storing computer-executable instructions that, when executed by the processing circuitry or the one or more processors, cause the one or more processors to perform the method in accordance with examples of the present disclosure.

**FIG. 3** is a flowchart illustrating a method 300 for controlling operation of an electric vehicle e.g., the fuel cell vehicle 10 or the battery electric vehicle 100 in the manner that allows conditioning or pre-conditioning the ESS before a vehicle departure. The conditioning or pre-conditioning the ESS may involve keeping the ESS sufficiently warm by raising and/or keeping a temperature of the ESS so that the temperature is above a certain threshold.

The electric vehicle comprises a power assembly that comprises the ESS, e.g., ESS 14, ESS 140, or any other ESS. With reference to FIGs. 1A and 2, in examples in which the electric vehicle is the FCEV, the power assembly 12 comprises, in addition to the ESS 14, the fuel cell system 20 comprising at least one fuel cell stack 22 comprising an anode side and a cathode side. With reference to FIG. 1B, in examples in which the electric vehicle is the BEV, the power assembly 120 comprises the ESS 140 which may be similar to the ESS 14 of the FCEV 10.

The method 300 may be performed by a control unit or controller or control system, such as e.g. control system 40 or control system 50 shown in FIGs. 1A, 1B, and 2. The processing circuitry of the control system may be configured to perform the process or method 300.

At **block 302,** the method 300 comprises detecting a request for a vehicle shutdown. The request for the shutdown of the electric vehicle may be detected, received, or obtained, e.g., when the vehicle is keyed off or when a similar input is received indicating that the vehicle has stopped and needs to be shut down. Detecting the request for the vehicle shutdown may comprise detecting that the vehicle has stopped. The request for the vehicle shutdown may be received, e.g., as input received from an operator such as e.g. a driver of the vehicle, or in another manner.

The vehicle may be traveling a route and the request for the vehicle shutdown may be received when the vehicle is stopped.

It should be noted that when the request for the vehicle shutdown is received, the vehicle is not yet being shut down and further processing is performed as discussed below, to determine whether a keep-warm strategy is to be implemented as the vehicle is being shut down.

At **block 303,** the method 300 may comprise, responsive to detecting the request for the vehicle shutdown, determining a first threshold temperature. The first threshold temperature may be defined as a temperature above which the ESS is maintained to allow a sufficient vehicle start-up performance and which allows extending a lifetime of the ESS.

The vehicle start-up performance may be defined as a performance of the vehicle after the vehicle is started, such as an ability of the vehicle to operate to as to perform maneuvers needed for a task or mission performed by the vehicle, e.g. ability to accelerate, decelerate, and maintain target speed. The vehicle start-up performance depends on how much electrical current or power can be taken from the ESS for one or more propulsion motors of the vehicle. The amount of electrical current or power that can be taken from the ESS, in turn, depends on a temperature of the ESS such as battery cells.

The vehicle start-up performance may be quantified using one or more parameters related to the vehicle's ability to accelerate, decelerate, and maintain target speed. Parameters defining the vehicle start-up performance may be used to determine the first threshold temperature. In some examples, at least some of the parameters defining the vehicle start-up performance may be available from a manufacturer of the vehicle.

The first threshold temperature may be selected based on one or more characteristics of the ESS, depending on chemistry of battery cells of the ESS, a type of the ESS, as well as an expected lifetime of the ESS. The first threshold temperature may also depend on an architecture or a type of the vehicle, e.g., a battery electric vehicle (BEV), a fuel cell electric vehicle (FCEV), or another type of the vehicle that uses the ESS as a power source. Furthermore, the first threshold temperature may also be selected based on how much energy/power is expected to be required for a next startup/heat up of the vehicle and power availability of the ESS at different temperatures.

In some examples, the first threshold temperature may be -10°C or - 15°C or -25°C, though other values may be used as well. For example, in some examples, the first threshold temperature may be -10°C or - 11°C or -12°C or -13°C or -14°C or -15°C or -16°C or -17°C or -18°C or -19°C or -20°C or -21°C or -22°C or - 23°C or -24°C or -25°C. In some examples, the first threshold temperature may be below -10°C.

At **block 304,** the method 300 comprises, responsive to detecting the request for the vehicle shutdown, estimating or determining a time to freeze for the ESS, the time to freeze comprising a duration of time until a temperature of the ESS can reduce or be reduced to below the first threshold temperature.

It should be noted that the time to freeze does not mean that any freezing of the ESS or another component of the vehicle will necessarily take place, but rather this term is used to denote a determined or calculated time that it would take for a temperature of the ESS to be lowered to below the first threshold temperature, e.g. due to the vehicle being stopped while the ambient temperature is below 0°C. The estimation of the time to freeze considers that the ESS would be shut down, after which, unless actions are taken, the temperature of the ESS can reduce or be reduced to below the first threshold temperature.

In some examples, the time to freeze, or a time from a current point in time until the temperature of the ESS will go below the first threshold temperature, may be determined using one or more of current and/or predicted ambient conditions, location data, and a thermal model of the ESS. The time to freeze may be indicative of when or after how long from the current point in time, given the ambient conditions, an environment around the vehicle, and properties of the vehicle and the ESS, the ESS is expected to cool down such that its temperature becomes to be below the first threshold temperature.

The current and/or predicted ambient conditions comprise one or more of a temperature, wind speeds, latitude, longitude, altitude, elevation, and/or other ambient conditions in an environment in which the vehicle is located when the request for the shutdown is detected. The current and/or predicted ambient conditions may be acquired from one or more sensors mounted on the vehicle, from a predictive whether service, from other vehicles, and/or a combination thereof.

The location data comprises data on a current geographical location of the vehicle, and may comprise a street address of the vehicle and/or other data. The vehicle may have a global positioning system (GPS) device, and the geographical location of the vehicle may be determined using the GPS and/or another positioning system. The location data may include one or more characteristics of the environment in which the vehicle is located, e.g., whether the vehicle is positioned outside or indoors e.g. in a parking garage.

The thermal model may comprise one or more of various thermal models configured to predict or estimate a temperature of the ESS based on heat generation. The thermal model models a heat generation mechanism of the ESS and a heat transfer from a heat source to the ESS as well as heat losses to the ambient air through equations of convection, radiation, and conduction. In some examples, the thermal model may comprise a lumped-mass thermal model which considers a thermal mass of the ESS and a heat transfer coefficient to estimate a heat loss and hence the temperature of the ESS. In some examples, the thermal model may be a more complex model where one or more parts of the ESS are modeled with corresponding different thermal masses and different heat transfer coefficients, to determine a temperature of the one or more parts of the ESS.

At **block 306,** the control system may determine whether a duration of the vehicle shutdown, or a duration of a stop of the vehicle or a vehicle stopover, is known. As used herein, the duration of the vehicle shutdown or stopover may be known in advance, at the time when the request for the vehicle shutdown is detected or received or obtained. The duration of the stop may be a duration of how long the vehicle, once it is shut down, is expected to be shut down until a next departure, a time when the vehicle is expected to start next, or it may be in any other form indicating the time that the vehicle is expected to be shut down and/or stopped. It should be appreciated that there will be some degree of uncertainty even when the duration of the vehicle shutdown is considered to be known. Thus, in some examples, the duration of the vehicle shutdown may be considered to be known when there is a certain degree of confidence that the available, in advance, duration of the vehicle shutdown reflects an actual duration of the vehicle shutdown. The degree of confidence may be represented by a numerical value that may be associated with an indication of the duration of the vehicle shutdown. For example, in some examples, when the degree of confidence associated with the duration of the vehicle shutdown is above 85% or above 90%, the duration of the vehicle shutdown may be considered to be known, whereas otherwise the duration of the vehicle shutdown may be considered to be not known. In some examples, the degree of confidence may be in a range of from 85% to 100% or from 90% to 100%. When the degree of confidence is below 90% or below 85%, it may be considered that the duration of the vehicle shutdown is not reliable enough and it thus may be decided that the duration of the vehicle shutdown is not known.

The value of the degree of confidence may be assigned to the duration of the vehicle shutdown based on various factors, such as, for example, historical data on prior user input received from the driver regarding the duration of the vehicle shutdown, date and time information, and based on whether or not the duration of the vehicle shutdown accurately reflected an actual duration of the vehicle shutdown.

The duration of the vehicle shutdown may be known in various circumstances. For example, an indication from a driver of the vehicle may be received indicating the duration of the vehicle shutdown or a departure time also referred to as a time of the next start of the vehicle. In some implementations, certain functions of the vehicle may be controlled automatically, and the control system may be aware when the vehicle will automatically start next. For example, input from the driver regarding an indication of a next departure time may be received, e.g., via an application on a driver's device or via other system, wherein a request to pre-condition the ESS may be associated, automatically or based on the driver input, with the indication of the next departure time for the vehicle. The request to pre-condition the ESS may be transmitted to the vehicle which may automatically start a pre-warm up of the ESS in due time before the indicated departure time.

In examples herein, the process 300 proceeds in two different ways depending on whether the duration of the vehicle stopover/parking is known or not. In some examples, when the duration of the shutdown of the vehicle is not known, the duration of the shutdown may be estimated.

At **block 308,** in response to determining that the duration of the vehicle shutdown is not known, the control system may estimate the duration of the vehicle shutdown in response to detecting the request for the vehicle shutdown. The duration of the vehicle shutdown may be determined or estimated or calculated as a first time threshold.

In some examples, the duration of the vehicle shutdown may be estimated using one or more of a driver behavior, location data, historical data on operation of the electric vehicle, mission data on one or more missions assigned to the electric vehicle, and/or fleet information regarding a fleet to which the electric vehicle belongs.

In some circumstances, the duration of the vehicle shutdown may be estimated based on historical data comprising a history of operation of the vehicle. For example, the vehicle may be in a location where a stopover for a certain duration of time may be expected. The vehicle may be performing a mission and the vehicle may be at the location where, e.g., the vehicle is parked overnight, over a weekend, a weekend day, or for another time period.

In some examples, the duration of the vehicle shutdown may be estimated based on historical data comprising a history of a driver behavior. For example, the vehicle may be in a location where the driver is expected to have a regular rest such that the vehicle may be parked/shut down for a certain duration of time.

In some examples, it may be estimated by the control system that, given one or more of a current location, time, weather, historical data on operation of the vehicle and/or the driver, for how long the vehicle is expected to be parked in the current location.

In some examples, the mission data on one or more missions assigned to the vehicle may be used to estimate the duration of the vehicle shutdown. The mission data may comprise information on a route for the vehicle including a start and end points, scheduled stops e.g. to load or unload a load, refuel, perform maintenance or for other reasons, etc. The fleet information regarding the fleet to which the vehicle belongs may comprise information or data on one or more routes assigned to the vehicle, schedules for the vehicles performing a mission, fuel usage by the vehicle and other vehicles in the fleet, actions to improve and enforce driver safety, actions to increase productivity, schedule preventive maintenance to reduce downtime, and other data. The data may be used, e.g., in combination with other data, to estimate the duration of the vehicle shutdown.

In some examples, the duration of the vehicle shutdown, or the first time threshold, may be determined based on whether a driver of the vehicle is present or expected to be present in the vehicle during the vehicle's stopover for a certain time period. For example, the vehicle may be expected to start after the driver is expected to no longer use the vehicle, e.g. a cabin or cab or driver compartment, for purposes other than driving e.g. a rest or break.

In some examples, one or both an actual driver presence and an expected driver presence may be determined or estimated. In some examples, determining or estimating whether the driver of the vehicle is expected to be present in the vehicle, during the stopover for the certain time period, comprises determining whether the driver is expected to be sleeping or living in the vehicle for the certain time period. For example, responsive to detecting that the driver is present in the cabin of the vehicle during nighttime after a certain time has passed since the vehicle had stopped, it may be determined that the driver is sleeping in the vehicle.

The presence of the driver in the vehicle may indicate that the driver is using the vehicle, for purposes other than driving, during the stopover. For example, the driver of a long-distance truck may be sleeping in the vehicle during rest periods. The driver may also occupy the vehicle during a work break. In some examples, it may be detected whether the driver is sleeping in the vehicle, e.g., using motion, temperature and other sensors in the vehicle that are configured to monitor the driver's status. One or more auxiliary devices may be turned on when the driver is present in the vehicle, e.g., one or more out of an air conditioner, a heater, a radio, etc.

In some examples, a driver's intent to stay in the vehicle while the vehicle is stopped for a certain duration of time may be determined based on a driver input - e.g., the driver may expressly indicate the driver's intent to remain in the vehicle for the certain time period. For example, as the vehicle stops, a driver input may be received that indicates whether it is expected that the driver will be sleeping in the vehicle during the vehicle stopover. The input may be received by the control system from the driver via an application or an app executed on a driver's personal device, via a vehicle's console, or in another manner. In some examples, the driver input may be received via a Human-Machine Interface (HMI) in the cabin of the vehicle. Data that can be used to determine whether the driver of the vehicle is present in the vehicle, such as e.g. one or more of sensor data and driver's input, may be used to generate an indication to the control system. It should be noted that the driver input indicating the driver's intent to remain in the vehicle may be different from an express indication of a duration of the vehicle shutdown that may be received from the driver in other circumstances.

Furthermore, in some examples, determining whether the driver is expected to be present in the vehicle during the stopover for the certain time period may be determined in part or entirely based on historical data on the driver behavior which may include e.g. data on locations at which the driver is typically sleeping or living in the vehicle or is present in the vehicle for another reason during the vehicle stopover. In some examples, the historical data may be used in combination with data from the driver's input, and/or along with other information. Additionally or alternatively, in some examples, whether or not the driver is expected to be sleeping in the vehicle may be determined based on regulations, e.g., which may require that the driver takes breaks after a certain amount of driving, that the vehicle e.g. a truck is not driven at certain times, and/or for other reasons.

In some examples, the driver may be instructed that the vehicle remains in the current location for a certain duration of time. This may be the case, for example, when the current location is a mandatory stop location for the vehicle, according to regulations. In some examples, the duration of the vehicle stop may depend on a duration of time during which the driver has been driving up until the stop. If it is time for a mandatory break, i.e. rest, for the driver, the duration of the vehicle stop may be determined as a duration of the mandatory break.

It should be noted that it is not required that the driver be actually asleep in the vehicle. The information on the driver presence in the vehicle for purposes other than driving the vehicle may be used to estimate the duration of the vehicle shutdown regardless of any actual behavior of the driver.

In some cases, some unexpected circumstances may affect a duration of the stopover of the vehicle. For example, the vehicle may require repairs, or there may be weather-related delays. As another example, the control system may obtain information on traffic along a route planned for the vehicle and this information may be used to determine the duration of the stopover of the vehicle. The duration of the stopover of the vehicle may be determined in various other ways, and in dependence on various factors.

In addition, it should be appreciated that, even though the present description refers to the driver of the vehicle, a person other than the driver, e.g., one or more passengers, may be expected to be present in the vehicle for the certain time period. The information on the expected presence of the person in the vehicle when the vehicle is stopped may be used to estimate the duration of the vehicle shutdown.

In some examples, data on whether or not the driver is sleeping in the cab may be used together with data on the location of the vehicle to estimate the duration of the vehicle shutdown. As one example, if a driver is sleeping in the cab of the vehicle on a Saturday night in Germany, it can be estimated that the duration of the vehicle stopover would be longer than 24 hours since it not allowed to drive trucks in Germany on Sunday.

Furthermore, in some examples, the duration of the vehicle shutdown may be determined based on input from the driver, in which case a degree of confidence associated with this duration may be e.g. below 90% or below 85%, and in any case with a degree of confidence that is lower than a degree of confidence associated with the duration of the vehicle shutdown when that duration is considered to be known. In such examples, as discussed above in connection with block 306, an indication of the duration of the vehicle shutdown may be received as a driver input, but because of the lower degree of confidence associated with this indication, the duration of the vehicle shutdown may be taken as an estimated duration rather than a known duration of the vehicle shutdown.

In some examples, when the duration of the vehicle shutdown cannot be estimated with a sufficiently high probability, e.g., with a probability of greater than 80% or 85% or 90%, a margin may be considered to overestimate the duration of the vehicle shutdown. For example, the margin may be used to estimate that the duration of the vehicle shutdown is 10% or 20% or 30% or 40% or 50% longer than the actually estimated duration of the vehicle. Other values of the margin may be used to consider the duration of the vehicle shutdown to be longer than estimated, when the duration of the vehicle shutdown cannot be estimated with a sufficiently high probability. The overestimation may be used to ensure that the ESS is managed properly in accordance with examples of the present disclosure.

At optional **block 309,** as shown in FIG. 3, the duration of the vehicle shutdown may be estimated using a driver input received in response to a request provided to the driver of the vehicle, the request instructing the driver to indicate the duration of the vehicle shutdown. The request may be in the form of a prompt or another type of a request that may be presented to the driver in a suitable manner to cause the driver to enter information on the expected duration of the vehicle shutdown. For example, in some cases, once the request for the vehicle shutdown is detected, the driver may be requested to indicate the duration of the shutdown via a user input. The user input may indicate one or more of the duration of the vehicle shutdown, a duration that the driver is expected to remain in the vehicle after the vehicle is shut down, as well as other information that is indicative of the duration of the vehicle shutdown.

The user input may be received from the driver or another person in various forms. In some examples, the request to indicate or specify the expected duration of the vehicle shutdown may be provided to the driver on a suitable user interface, e.g., a user interface on a dashboard of the vehicle or a user interface associated with a computing device. The computing device may be associated with the vehicle and/or it may be a portable device configured to be used to communicate with the vehicle. For example, a smartphone, a tablet, or another computing device may comprise a user interface which may present a prompt or another type of information that requests the driver to enter, e.g., on the user interface or in another way, the expected duration of the vehicle shutdown.

At **block 310,** the control system compares a duration of the vehicle shutdown and the time to freeze. The duration of the vehicle shutdown, or the vehicle stopover, may be a known duration, or the duration of the vehicle stopover may an estimated/predicted duration of the vehicle stopover as determined at block 308. Thus, at block 310, the control system performs a comparison between the duration of the vehicle shutdown, either available at the time of the request for the vehicle shutdown or estimated after or when the request for the vehicle shutdown is detected, and the time to freeze or the determined time for the ESS to go below the first threshold temperature. The duration of the vehicle shutdown and the duration of time until the temperature of the ESS can be reduced to below the first threshold temperature may be expressed in comparable units such that the control system may determine whether the time to freeze is longer than the duration of the vehicle shutdown.

Thus, at **block 312,** the control system may determine whether the time to freeze or the duration of time until the temperature of the ESS can be reduced to below the first threshold temperature is longer than the duration of the vehicle shutdown.

At **block 314,** responsive to determining that the time to freeze is longer than the duration of the vehicle shutdown, the control system may instruct the electric vehicle to perform the vehicle shutdown without performing a keep-warm strategy for the ESS. The requested vehicle shutdown may be completed and the keep-warm strategy will not be performed at or after the vehicle shutdown.

The vehicle is stopped or parked when it is shut down, and functions of the vehicle that are not used for driving, or are otherwise not needed when the vehicle is parked, may be disabled. The electric drive motor may be turned off. When the keep-warm strategy or procedure is not initiated and not performed, fewer components may remain operating when the vehicle is shut down. Certain devices, e.g., an air conditioner or a cabin heater may remain to be operating e.g., when the driver remains in the vehicle during the vehicle shutdown.

At optional **block 313,** responsive to determining that the time to freeze is not longer than the duration of the vehicle shutdown i.e. equal to or shorter than the duration of the vehicle shutdown, the control system may generate a message to the driver, the message informing the driver about a risk of the ESS freezing.

The processing at block 313 may also comprise generating a request provided to the driver of the vehicle, the request instructing the driver to indicate the duration of the vehicle shutdown. This may be performed when the processing as shown in the optional block 309 is not performed, i.e. the driver has not been prompted to enter the duration of the vehicle shutdown or a time of the next start/departure of the vehicle. The request at block 313 may be in the form of a prompt or another type of a request that may be presented to the driver in a suitable manner/form to cause the driver to enter information on the expected duration of the vehicle shutdown. The driver input may be received, in response to the request by the control system, via an application or an app executed on a driver's device, via a vehicle's console, or in another manner.

Furthermore, in some examples, as shown by an arrow 311 in FIG. 3, from the processing at block 313, the control system may return to the block 312 where the control system determines whether the time to freeze is longer than the duration of the vehicle shutdown, in which case the duration of the vehicle shutdown is determined based on the driver input. The method 300 may then proceed as described below.

At **block 315,** responsive to determining that the time to freeze is not longer than the duration of the vehicle shutdown, the control system may determine a second threshold temperature. The second threshold temperature may be defined as a temperature at which the ESS will be kept sufficiently warm so that a cold start of the vehicle may be avoided. In some examples, the second threshold temperature may be defined as a temperature below which the start-up performance of the ESS would not permit to operate the vehicle properly and below which the ESS lifetime may decrease.

The vehicle start-up performance may be quantified using one or more parameters related to the vehicle's ability to accelerate, decelerate, and maintain target speed. Parameters defining the vehicle start-up performance may be used to determine the second threshold temperature. In some examples, at least some of the parameters defining the vehicle start-up performance may be available from a manufacturer of the vehicle.

At **block 316,** responsive to determining that the time to freeze is not longer than the duration of the vehicle shutdown, the control system may determine a keep-warm time limit comprising the time to freeze and an additional time during which the temperature of the ESS can be maintained above the second threshold temperature. The time to freeze is not longer than the duration of the vehicle shutdown when the time to freeze is shorter than or equal to the duration of the vehicle shutdown. The temperature of the ESS may reduce to below the first threshold temperature, i.e. the ESS may become undesirably cold unless additional measures, as provided by examples of the present disclosure, are performed.

The keep-warm time limit may be calculated or determined to evaluate or determine whether the keep-warm strategy may or may not be adopted, such as whether it is possible to implement the keep-warm strategy.

The additional time may depend on one or more of a configuration or type of the electric vehicle, a state of charge (SoC) of the ESS, a state or amount of fuel in a hydrogen tank if the electric vehicle comprises a FCEV, and/or other factors.

The additional time may depend on a configuration of the electric vehicle. If the vehicle comprises fuel cell electric vehicle 10, e.g. as shown in FIG. 1A, the hydrogen heater 32, may be used to raise the temperature of the ESS and/or to keep the ESS warm such as at or above the second threshold temperature. The hydrogen heater 32 may generate, via an exothermic chemical reaction, heat into the coolant of the cooling system, and the generated heat may be circulated through the ESS such as batteries.

In this case, a state of fuel in the at least one hydrogen tank 30 may be used to determine the additional time that may be used to keep the ESS warm i.e. above the second threshold temperature.

The additional time may be dependent on a SoC of the ESS. In examples in which the electric vehicle is a fuel cell vehicle, the additional time may be dependent on a SoC the ESS and on a status of one or more hydrogen storage containers of the fuel cell vehicle configured to supply hydrogen gas to the anode side of at least one fuel cell stack of the fuel cell system of the vehicle. The one or more hydrogen storage containers may be e.g. the at least one hydrogen tank 30.

In examples in which the electric vehicle is the fuel cell electric vehicle, the fuel cell system may be operated to raise the temperature of the ESS and/or to keep the temperature of the ESS above the second threshold temperature. The additional time may be determined using a state of fuel, such as an amount of fuel, in the at least one hydrogen tank 30, wherein the state of fuel may be used to determine for how long the fuel cell system may be operated when the vehicle is shut down. Also, a SoC of the ESS of the fuel cell vehicle may be taken into consideration in determining whether the ESS can absorb the power from the fuel cell system.

In some examples, a fuel threshold level may be defined for the fuel cell electric vehicle. The additional time, which defines for how long the keep-warm strategy may be performed, may depend on a difference between a current level or amount of fuel in the hydrogen tank and the fuel threshold level. A duration of the additional time may depend on for how long the fuel cell system and/or the ESS may be operated, based on the amount of fuel in the hydrogen tank. The performance of the keep-warm strategy may continue for as long as a level of fuel in the hydrogen tank remains to be above the fuel threshold level. A maximum level of fuel from the hydrogen tank that can be consumed for the keep-warm strategy may be defined. Once the level of fuel in the hydrogen tank decreases to or below the fuel threshold level, and/or when the maximum allowed level or amount of fuel has been consumed, a cooldown behavior of the fuel cell system and the ESS may be considered, to determine for how much longer the fuel cell system and/or the ESS may remain warm after the hydrogen is no longer supplied from the hydrogen tank.

In some examples, a maximum amount of fuel that can be consumed to adopt the keep-warm strategy may be defined.

In implementations of the fuel cell vehicle in which the vehicle does not include a hydrogen heater or in situations when it is not desirable to run the fuel cell system, the ESS may need to be used to provide power to run an electric heater and/or a coolant pump to remain at or above the second threshold temperature. In such situations, a SoC of the ESS may be considered to determine a time for which the ESS may be kept at or above the second threshold temperature. It may not be desirable to run or operate the ESS when a state of fuel is low in the hydrogen tank and/or when the ESS is charged to a degree that it cannot take or store the power from the fuel cell system. In such cases, the fuel cell system may be shut down and it may be controlled to remain to be shut down, to avoid wasting energy.

In some examples, as shown in FIG. 1B, the vehicle may be a BEV. In the BEV, heat can come from a source such as e.g. an electric heater e.g. heater 69 in FIG. 1B. Thus, the additional time and thus the keep-warm time limit may be calculated based on a SoC of the ESS. A strategy for the BEV may be to continue heating the ESS until the SoC has decreased to a defined limit. This may also include a time after the SoC is below a certain value plus a time to cool down the ESS below the first threshold temperature. Increasing the temperature of the ESS increases a power ability of the ESS, such as how much power can be obtained from or saved in the ESS.

At **block 318,** the method comprises determining whether the keep-warm time limit is longer than the duration of the vehicle shutdown. This is used to determine whether the vehicle will or may start while the temperature of ESS may remain to be at or above the second threshold temperature when the keep-warm time limit is longer than the duration of the vehicle shutdown, or whether the temperature of ESS may go below the second threshold temperature while the vehicle is still shut down when the keep-warm time limit is not longer i.e. shorter than the duration of the vehicle shutdown.

At **block 320,** the method comprises, responsive to determining that the keep-warm time limit is longer than the duration of the vehicle shutdown, instructing the fuel cell electric vehicle to perform the vehicle shutdown and initiate the keep-warm strategy for the ESS, the keep-warm strategy comprising one or more actions to maintain the temperature of the ESS at or above the second threshold temperature. The requested vehicle shutdown may be completed. Initiating the keep-warm strategy may comprise instructing the vehicle to start the one or more actions and/or to postpone one or more actions forming part of the keep-warm strategy until certain conditions are met.

In some examples, the keep-warm strategy may be started or initiated and performed at a time the vehicle is being shut down. In some examples, the keep-warm strategy may be performed after a certain amount of time has passed after the vehicle shutdown was shut down. For example, the keep warm strategy may be initiated at the vehicle shutdown, but the keep warm strategy may be such that the heating may be triggered later, after the vehicle has been shut down, for which certain functions of the vehicle may need to be activated during the time when the vehicle is considered to be shut down. In some cases, the keep-warm strategy may be initiated when ambient temperatures are decreasing, which may happen e.g. in the middle of the night or at another time. When the vehicle shuts down, the ambient temperature may not be cold enough to require keeping the ESS warm.

Thus, the keep-warm strategy may be started or initiated when the vehicle is being shut down, but the actual heating may be performed as part of the keep-warm strategy when the temperature of the ESS is decreased to below the second threshold temperature but still above the first threshold temperature.

One or more functions of the vehicle may be woken up or started up for performing or completing the keep-warm strategy, even though the vehicle will be considered to be shut down such that the vehicle will be keyed off, its electric motor will remain to be turned off, and the vehicle will thus not move. The one or more functions of the vehicle may be woken up when an ambient temperature falls below a certain threshold temperature and/or at other circumstances. In some implementations, the keep-warm strategy may be implemented as an on-off-on-off strategy.

The control system may instruct the vehicle to automatically perform the keep-warm strategy to raise the ESS temperature and/or keep the ESS temperature at or above the second threshold temperature. The keep-warm strategy may be performed by using suitable power or heat sources to raise the ESS temperature and/or keep the ESS temperature at or above the second threshold temperature. Non-limiting examples of the power or heat sources comprise an electric heater in a battery electric vehicle, a hydrogen heater in a fuel cell electric vehicle, one or more coolant pumps in the fuel cell electric vehicle, the ESS itself, a fuel cell system in a fuel cell electric vehicle. In the fuel cell electric vehicle, power or heat sources may comprise one or more out of the hydrogen heater, the coolant pump, the ESS, or the fuel cell system. In the battery electric vehicle, power or heat sources may comprise one or more out of the electric heater and the ESS. The power or heat source may be operated, based on instructions of the control system, to cause the temperature of the ESS to be raised to at or above the second threshold temperature.

At **block 322,** the method comprises, responsive to determining that the keep-warm time limit is not longer than the duration of the vehicle shutdown, automatically generating a request instructing to connect the vehicle to the grid or move the vehicle to an environment where an ambient temperature remains above a freezing temperature.

The processing at block 322 may comprise generating a message to the driver, the message instructing the driver to connect the vehicle to the grid or move the vehicle to an environment where the ambient temperature remains above a freezing temperature. The message may also inform the driver about a risk of freezing and/or a risk of a potential damage to the ESS unless an action is taken, such as connecting the vehicle to the grid or moving it indoors.

The keep-warm strategy may be not initiated and thus not performed because the vehicle is expected to be moved indoors e.g. to a garage or other place, and/or to be connected to the grid. For example, FIG. 2 illustrates that the FCEV 10 may be connected to the grid. A BEV may also be connected to the grid, as well known for battery electric vehicles.

After the vehicle is parked indoors and/or connected to the grid, the vehicle may be shut down.

The method in accordance with examples of the present disclosure may be implemented in any electric vehicle, such as in a FCEV, a BEV, or another type of a vehicle. To perform the method steps described herein, the control system such as control system 40 or 50 may be configured to perform the processing described in connection with FIG. 3 and/or any other examples in accordance with aspects of the present disclosure.

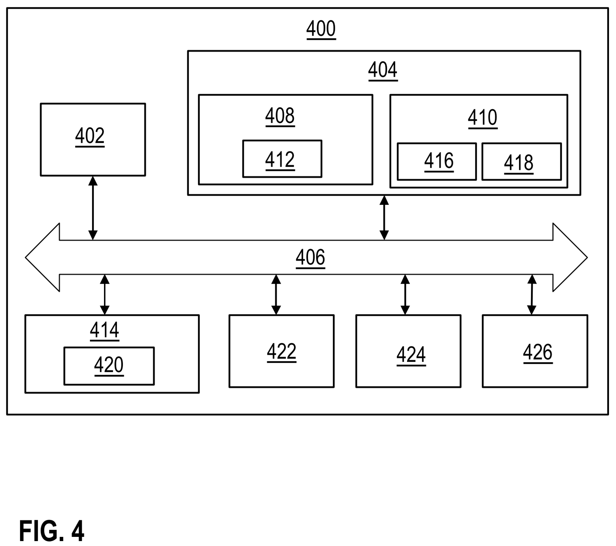

**FIG. 4** is a schematic diagram of a computer system **400** for implementing examples disclosed herein. In some examples, the control systems 40 and 50 may be implemented as the computer system 400. The computer system **400** is adapted to execute instructions from a computer-readable medium to perform these and/or any of the functions or processing described herein. The computer system **400** may be connected (e.g., networked) to other machines in a LAN, an intranet, an extranet, or the Internet. While only a single device is illustrated, the computer system **400** may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system **400** may comprise at least one computing device or electronic device capable of including firmware, hardware, and/or executing software instructions to implement the functionality described herein. The computer system **400** may include processing circuitry **402** (e.g., processing circuitry including one or more processor devices or control units), a memory **404,** and a system bus **406.** The computer system **400** may include at least one computing device having the processing circuitry **402.** The system bus **406** provides an interface for system components including, but not limited to, the memory **404** and the processing circuitry **402.** The processing circuitry **402** may include any number of hardware components for conducting data or signal processing or for executing computer code stored in memory **404.** The processing circuitry **402** may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry **402** may further include computer executable code that controls operation of the programmable device.

The system bus **406** may be any of several types of bus structures that may further interconnect to a memory bus (with or without a memory controller), a peripheral bus, and/or a local bus using any of a variety of bus architectures. The memory **404** may be one or more devices for storing data and/or computer code for completing or facilitating methods described herein. The memory **404** may include database components, object code components, script components, or other types of information structure for supporting the various activities herein. Any distributed or local memory device may be utilized with the systems and methods of this description. The memory **404** may be communicably connected to the processing circuitry **402** (e.g., via a circuit or any other wired, wireless, or network connection) and may include computer code for executing one or more processes described herein. The memory **404** may include non-volatile memory **408** (e.g., read-only memory (ROM), erasable programmable read-only memory (EPROM), electrically erasable programmable read-only memory (EEPROM), etc.), and volatile memory **410** (e.g., random-access memory (RAM)), or any other medium which can be used to carry or store desired program code in the form of machine-executable instructions or data structures and which can be accessed by a computer or other machine with processing circuitry **402.** A basic input/output system (BIOS) **412** may be stored in the non-volatile memory **408** and can include the basic routines that help to transfer information between elements within the computer system **400.**

The computer system **400** may further include or be coupled to a non-transitory computer-readable storage medium such as the storage device **414,** which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device **414** and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device **414** and/or in the volatile memory **410,** which may include an operating system **416** and/or one or more program modules **418.** All or a portion of the examples disclosed herein may be implemented as a computer program **420** stored on a transitory or non-transitory computer-usable or computer-readable storage medium (e.g., single medium or multiple media), such as the storage device **414,** which includes complex programming instructions (e.g., complex computer-readable program code) to cause the processing circuitry **402** to carry out actions described herein. Thus, the computer-readable program code of the computer program **420** can comprise software instructions for implementing the functionality of the examples described herein when executed by the processing circuitry **402.** In some examples, the storage device **414** may be a computer program product (e.g., readable storage medium) storing the computer program **420** thereon, where at least a portion of a computer program **420** may be loadable (e.g., into a processor) for implementing the functionality of the examples described herein when executed by the processing circuitry **402.** The processing circuitry **402** may serve as a controller or control system for the computer system **400** that is to implement the functionality described herein.

The computer system **400** may include an input device interface **422** configured to receive input and selections to be communicated to the computer system **400** when executing instructions, such as from a keyboard, mouse, touch-sensitive surface, etc. Such input devices may be connected to the processing circuitry **402** through the input device interface **422** coupled to the system bus **406** but can be connected through other interfaces, such as a parallel port, an Institute of Electrical and Electronic Engineers (IEEE) 1394 serial port, a Universal Serial Bus (USB) port, an IR interface, and the like. The computer system **400** may include an output device interface **424** configured to forward output, such as to a display, a video display unit, or to another display. The computer system **400** may include a communications interface **426** suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

Example 1. A method for controlling operation of an electric vehicle comprising a power assembly that comprises an energy storage system (ESS), the method comprising:
responsive to detecting a request for a vehicle shutdown of the electric vehicle, estimating a time to freeze for the ESS, the time to freeze comprising a duration of time until a temperature of the ESS can be reduced to below a first threshold temperature;
comparing a duration of the vehicle shutdown and the time to freeze;
responsive to determining that the time to freeze is longer than the duration of the vehicle shutdown, instructing the electric vehicle to perform the vehicle shutdown without performing a keep-warm strategy for the ESS;
responsive to determining that the time to freeze is not longer than the duration of the vehicle shutdown, determining a keep-warm time limit comprising the time to freeze and an additional time during which the temperature of the ESS can be maintained above a second threshold temperature; and
responsive to determining that the keep-warm time limit is longer than the duration of the vehicle shutdown, instructing the electric vehicle to perform the vehicle shutdown and initiate the keep-warm strategy for the ESS, the keep-warm strategy comprising maintaining the temperature of the ESS above the second threshold temperature.

Example 2. The method of Example 1, comprising, responsive to determining that the keep-warm time limit is not longer than the duration of the vehicle shutdown, automatically generating a request instructing to connect the electric vehicle to a grid or move the electric vehicle to an environment where an ambient temperature remains above a freezing temperature.

Example 2. The method of any of Examples 1 to 2, comprising estimating the duration of the vehicle shutdown in response to detecting the request for the vehicle shutdown.

Example 4. The method of Example 3, wherein the duration of the vehicle shutdown is estimated using one or more of a driver input, a driver behavior, location data, historical data on operation of the electric vehicle, mission data on one or more missions assigned to the electric vehicle, and/or fleet information regarding a fleet to which the electric vehicle belongs.

Example 5. The method of Example 4, wherein the duration of the vehicle shutdown is estimated using the driver input received in response to a request provided to the driver and instructing the driver to indicate the duration of the vehicle shutdown.

Example 6. The method of any of Examples 1 to 2, wherein the duration of the vehicle shutdown is known at a time the request for the vehicle shutdown is detected.

Example 7. The method of any of Examples 1 to 6, wherein the time to freeze is determined using one or more of current and/or predicted ambient conditions, location data, and a thermal model of the ESS.

Example 8. The method of any of Examples 1 to 7, comprising determining the first threshold temperature.

Example 9. The method of any of Examples 1 to 8, comprising determining the second threshold temperature.

Example 10. A control system configured to control operation of an electric vehicle comprising a power assembly comprising an energy storage system (ESS), the control system comprising processing circuitry that is configured to:
responsive to detecting a request for a vehicle shutdown of the electric vehicle, estimate a time to freeze for the ESS, the time to freeze comprising a duration of time until a temperature of the ESS can be reduced to below a first threshold temperature;
compare a duration of the vehicle shutdown and the time to freeze;
responsive to determining that the time to freeze is longer than the duration of the vehicle shutdown, instruct the vehicle to perform the vehicle shutdown without performing a keep-warm strategy for the ESS;
responsive to determining that the time to freeze is not longer than the duration of the vehicle shutdown, determine a keep-warm time limit comprising the time to freeze and an additional time during which the temperature of the ESS can be maintained above a second threshold temperature; and
responsive to determining that the keep-warm time limit is longer than the duration of the vehicle shutdown, instruct the vehicle to perform the vehicle shutdown and initiate the keep-warm strategy for the ESS.

Example 11. The control system of Example 10, wherein the processing circuitry is further configured to, responsive to determining that the keep-warm time limit is not longer than the duration of the vehicle shutdown, automatically generate a request instructing to connect the electric vehicle to a grid or move the electric vehicle to an environment where an ambient temperature remains above a freezing temperature.

Example 12. The control system of any of Examples 10 to 11, wherein the processing circuitry is further configured to estimate the duration of the vehicle shutdown in response to detecting the request for the vehicle shutdown.

Example 13. The control system of Example 12, wherein the duration of the vehicle shutdown is estimated using one or more of a driver input, a driver behavior, location data, historical data on operation of the electric vehicle, mission data on one or more missions assigned to the electric vehicle, and/or fleet information regarding a fleet to which the electric vehicle belongs.

Example 14. The control system of Example 13, wherein the duration of the vehicle shutdown is estimated using the driver input received in response to a prompt presented to the driver and instructing the driver to indicate the duration of the vehicle shutdown.

Example 15. The control system of any of Examples 10 to 11, wherein the duration of the vehicle shutdown is known at a time the request for the vehicle shutdown is detected.

Example 16. The control system of any of Examples 10 to 15, wherein the time to freeze is determined using one or more of current and/or predicted ambient conditions, location data, and properties of a thermal management system of the power assembly.

Example 17. An electric vehicle comprising the control system of any of Examples 10 to 16.

Example 18. The electric vehicle of Example 17, wherein the vehicle comprises a fuel cell electric vehicle.

Example 19. A computer program product comprising computer-executable instructions, which, when executed by processing circuitry, cause the processing circuitry to perform the method of any of Examples 1 to 9.

Example 20. A tangible non-transitory computer-readable storage medium, having stored thereon a computer program product comprising computer-executable instructions which, when executed by processing circuitry, cause the processing circuitry to perform the method of any of Examples 1 to 9.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, steps, operations, elements, and/or components, but do not preclude the presence or addition of one or more other features, integers, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the inventive concepts being set forth in the following claims.

## Claims

1. A method (300) for controlling operation of an electric vehicle (10, 100) comprising a power assembly (12, 120) that comprises an energy storage system, ESS, (14, 140), the method comprising:
responsive to detecting a request for a vehicle shutdown of the electric vehicle, estimating (304) a time to freeze for the ESS, the time to freeze comprising a duration of time until a temperature of the ESS can be reduced to below a first threshold temperature;
comparing (310) a duration of the vehicle shutdown and the time to freeze;
responsive to determining (312) that the time to freeze is longer than the duration of the vehicle shutdown, instructing (314) the electric vehicle to perform the vehicle shutdown without performing a keep-warm strategy for the ESS;
responsive to determining (312) that the time to freeze is not longer than the duration of the vehicle shutdown, determining (316) a keep-warm time limit comprising the time to freeze and an additional time during which the temperature of the ESS can be maintained above a second threshold temperature; and
responsive to determining (318) that the keep-warm time limit is longer than the duration of the vehicle shutdown, instructing (320) the electric vehicle to perform the vehicle shutdown and initiate the keep-warm strategy for the ESS, the keep-warm strategy comprising maintaining the temperature of the ESS above the second threshold temperature.

2. The method of claim 1, comprising, responsive to determining (318) that the keep-warm time limit is not longer than the duration of the vehicle shutdown, automatically generating (322) a request instructing to connect the electric vehicle to a grid or move the electric vehicle to an environment where an ambient temperature remains above a freezing temperature.

3. The method of any of claims 1 to 2, comprising estimating (308) the duration of the vehicle shutdown in response to detecting the request for the vehicle shutdown.

4. The method of claim 3, wherein the duration of the vehicle shutdown is estimated using one or more of a driver input, a driver behavior, location data, historical data on operation of the electric vehicle, mission data on one or more missions assigned to the electric vehicle, and/or fleet information regarding a fleet to which the electric vehicle belongs.

5. The method of claim 4, wherein the duration of the vehicle shutdown is estimated using the driver input received in response to a request provided (309) to the driver and instructing the driver to indicate the duration of the vehicle shutdown.

6. The method of any of claims 1 to 2, wherein the duration of the vehicle shutdown is known at a time the request for the vehicle shutdown is detected.

7. The method of any of claims 1 to 6, wherein the time to freeze is determined using one or more of current and/or predicted ambient conditions, location data, and a thermal model of the ESS.

8. A control system (40, 50, 400) configured to control operation of an electric vehicle (10, 100) comprising a power assembly (12, 120) comprising an energy storage system, ESS, (14, 140), the control system (40, 50, 400) comprising processing circuitry (42, 402) that is configured to:
responsive to detecting a request for a vehicle shutdown of the electric vehicle, estimate a time to freeze for the ESS, the time to freeze comprising a duration of time until a temperature of the ESS can be reduced to below a first threshold temperature;
compare a duration of the vehicle shutdown and the time to freeze;
responsive to determining that the time to freeze is longer than the duration of the vehicle shutdown, instruct the vehicle to perform the vehicle shutdown without performing a keep-warm strategy for the ESS;
responsive to determining that the time to freeze is not longer than the duration of the vehicle shutdown, determine a keep-warm time limit comprising the time to freeze and an additional time during which the temperature of the ESS can be maintained above a second threshold temperature; and
responsive to determining that the keep-warm time limit is longer than the duration of the vehicle shutdown, instruct the vehicle to perform the vehicle shutdown and initiate the keep-warm strategy for the ESS.

9. The control system of claim 8, wherein the processing circuitry is further configured to, responsive to determining that the keep-warm time limit is not longer than the duration of the vehicle shutdown, automatically generate a request instructing to connect the electric vehicle to a grid or move the electric vehicle to an environment where an ambient temperature remains above a freezing temperature.

10. The control system of any of claims 8 to 9, wherein the processing circuitry is further configured to estimate the duration of the vehicle shutdown in response to detecting the request for the vehicle shutdown.

11. The control system of claim 10, wherein the duration of the vehicle shutdown is estimated using one or more of a driver input, a driver behavior, location data, historical data on operation of the electric vehicle, mission data on one or more missions assigned to the electric vehicle, and/or fleet information regarding a fleet to which the electric vehicle belongs.

12. The control system of claim 11, wherein the duration of the vehicle shutdown is estimated using the driver input received in response to a prompt presented to the driver and instructing the driver to indicate the duration of the vehicle shutdown.

13. The control system of any of claims 8 to 9, wherein the duration of the vehicle shutdown is known at a time the request for the vehicle shutdown is detected; and/or
wherein the time to freeze is determined using one or more of current and/or predicted ambient conditions, location data, and properties of a thermal management system of the power assembly.

14. An electric vehicle (10, 100) comprising the control system (40, 50, 400) of any of claims 8 to 14.

15. A computer program product comprising computer-executable instructions, which, when executed by processing circuitry, cause the processing circuitry to perform the method of any of claims 1 to 7.
